# EUROPEAN PATENT APPLICATION

(11) **EP 4 757 005 A1**
(43) Date of publication of application: **10.06.2026**
(21) Application number: 24849332.2
(22) Date of filing: 03.05.2024
(51) Int. Cl.: H01M 10/658, H01M 10/613, H01M 10/625, H01M 10/6556, H01M 10/6551, H01M 50/262, H01M 50/249

(54) **BATTERY PACK**

(30) Priority: 03.08.2023 KR 20230101525
(71) Applicant: SK On Co., Ltd., Seoul 03161 (KR)
(72) Inventor: LEE, Seung Hun, Daejeon 34124 (KR); KIM, Seok Min, Daejeon 34124 (KR); SON, Sol San, Daejeon 34124 (KR); SHIN, Suk Ho, Daejeon 34124 (KR); OH, Jung Hun, Daejeon 34124 (KR)
(74) Representative: Stolmár & Partner Patentanwälte PartG mbB
(86) International application number: PCT/KR2024/006033
(87) International publication number: WO 2025/028760

(57) **Abstract**

The present disclosure may provide a battery pack comprising: a power storage device including battery cells; and a plate having a seating portion in which the power storage device is seated, wherein the plate has a through-hole in at least a partial region thereof, and at least a part of the through-hole is covered with a sealing material.

## Description

### [Technical Field]

The present disclosure relates to a battery pack.

### [Background Art]

In recent years, the demand for mobile devices such as smartphones, tablet PCs, and wireless earphones has been increasing. In addition, with the development of electric vehicles, energy storage batteries, robots, and satellites in full swing, research on high-performance secondary batteries that may be repeatedly charged and discharged as an energy source is actively underway.

Currently, commercialized secondary batteries include nickel-cadmium batteries, nickel-hydrogen batteries, nickel-zinc batteries, and lithium secondary batteries. Compared to nickel-based secondary batteries, lithium secondary batteries have the advantages of free charge and discharge, very low self-discharge rate, and high energy density due to almost no memory effect.

Lithium secondary batteries are subject to thermal runaway due to mechanical, electrical, thermal, abnormalities or internal short circuits. When a separator between an anode and a cathode of a lithium secondary battery is damaged, the anode and the cathode come into contact with each other, causing the stored electrochemical energy to be spontaneously released with heat.

A battery pack can be defined as a device that includes power storage devices, which include one or more battery cells, a battery management system (BMS), various control devices (e.g., cooling devices), and protection systems. Reference may be made to Patent Document 1 for a battery pack. In the battery pack, power storage devices may be generally seated on a cooling plate, such that when thermal runaway occurs in a particular one of the power storage devices, a lot of heat is generated, and the heat may be conducted to other power storage devices through the cooling plate. This process may lead to a cascade of thermal runaway in the power storage devices. To prevent this phenomenon, various battery pack structures have been presented.

### [Disclosure]

### [Technical Problem]

The present disclosure aims to provide a battery pack which may effectively prevent a thermal propagation phenomenon. The present disclosure also aims to provide a battery pack which may effectively dissipate heat generated in a battery cell. The present disclosure also aims to provide a battery pack which is lightweight and has the excellent durability. The present disclosure also aims to provide a battery pack with improved airtightness.

The present disclosure also aims to provide an electrical device including one or more battery packs.

### [Technical Solution]

A battery pack according to an embodiment of the present disclosure may include a power storage device including a battery cell, and a plate having a seating portion in which the power storage device is seated, the plate may have a through-hole in at least a partial region thereof, and at least a part of the through-hole may be covered with a sealing material.

In the battery pack according to an embodiment of the present disclosure, the through-hole may be provided in a region which does not overlap with the seating portion.

In the battery pack according to an embodiment of the present disclosure, the plate may include a plurality of seating portions, and the through-hole may be provided between the seating portions which are adjacent to each other.

In the battery pack according to an embodiment of the present disclosure, the plate may include a plurality of through-holes, and at least a part of each of the through-holes may be covered with the sealing material.

In the battery pack according to an embodiment of the present disclosure, the sealing material may include an adhesive.

In the battery pack according to an embodiment of the present disclosure, the through-hole may be entirely covered with the sealing material.

The battery pack according to an embodiment of the present disclosure may further include a pack frame surrounding the power storage device, and the pack frame may be in contact with the sealing material in at least a partial region.

In the battery pack according to an embodiment of the present disclosure, the pack frame may further include a groove portion in at least a part of the region in contact with the sealing material.

In the battery pack according to an embodiment of the present disclosure, the sealing material may fill at least a partial region of the groove portion.

In the battery pack according to an embodiment of the present disclosure, the pack frame may include the groove portion which does not face the through-hole.

The battery pack according to an embodiment of the present disclosure may further include a fixing member, and the fixing member may couple and secure the plate and the pack frame to each other.

In the battery pack according to an embodiment of the present disclosure, the pack frame may have a mounting hole, the mounting hole and the through-hole may face each other in at least a partial region, and the fixing member may pass through both the through-hole provided in the plate and the mounting hole provided in the pack frame to couple and secure the plate and the pack frame together.

In the battery pack according to an embodiment of the present disclosure, the pack frame may further have an additional hole and sealing tape, and at least a part of the additional hole may be covered by the sealing tape.

In the battery pack according to an embodiment of the present disclosure, the plate may include a first plate having a plate shape and a second plate having a bent shape, and the first plate and the second plate may be joined and connected.

In the battery pack according to an embodiment of the present disclosure, the plate may further include a flow path in at least a part of a space between the first plate and the second plate.

In the battery pack according to an embodiment of the present disclosure, the plate may include the flow path in a region where the through-hole is not provided.

The battery pack according to an embodiment of the present disclosure may include a thermally conductive layer on the seating portion, and the power storage device may be seated on the thermally conductive layer.

In the battery pack according to an embodiment of the present disclosure, the thermally conductive layer may have thermal conductivity of 0.1 W/m·K or more.

In the battery pack according to an embodiment of the present disclosure, the battery cell included in the power storage device may be in direct contact with the thermally conductive layer.

An electrical device according to an embodiment of the present disclosure may include a battery pack and at least a part of the battery pack may be a battery pack according to an embodiment of the present disclosure. An automobile according to an embodiment of the present disclosure may include a power unit including the battery pack and a power fixing unit for securing the power unit, the battery pack may include a pack frame including a first frame mounting hole and a second frame mounting hole, one or more selected from a group consisting of the first frame mounting hole and the second frame mounting hole may face a hole formed in at least a part of the power fixing unit, and a fastening member may pass through the one or more selected from the group consisting of the first frame mounting hole and the second frame mounting hole and through a hole in the power fixing unit, and may secure the battery pack.

### [Advantageous Effects]

The present disclosure may provide a battery pack which may effectively prevent a thermal propagation phenomenon. Further, the present disclosure may provide a battery pack which may effectively dissipate heat generated in a battery cell. The present disclosure may provide a battery pack which is lightweight and has the excellent durability. The present disclosure may provide a battery pack with improved airtightness.

The disclosure may also provide an electrical device including one or more battery packs.

### [Description of Drawings]

The drawings shown in the present disclosure are in accordance with embodiments of the present disclosure, and the proportions of the width, length, or height of the respective components are intended for the purpose of illustrating the present disclosure, and the proportions may differ from those of actual implementations. In addition, in the coordinate system shown in the drawings, each axis may be perpendicular to the others, and the direction indicated by an arrow may represent the + direction and the direction opposite to the direction indicated by the arrow (i.e., rotated 180 degrees) may represent the - direction.
FIG. 1 is a schematic diagram of a partial structure of a battery pack according to an embodiment of the present disclosure.
FIG. 2 is a schematic diagram of a partial structure of a battery pack according to an embodiment of the present disclosure, showing a portion of the structure in an XZ plane in FIG. 1.
FIG. 3 is a schematic diagram of a partial structure of a battery pack according to an embodiment of the present disclosure, which is another example of FIG. 2.
FIG. 4 is a schematic diagram of a partial structure of a battery pack according to an embodiment of the present disclosure, showing a portion of the structure in an XY plane in FIG. 1.
FIG. 5 is a schematic diagram of a partial structure of a battery pack according to an embodiment of the present disclosure, which is another example of FIG. 4.
FIG. 6 is a schematic diagram of a partial structure of a pack frame of a battery pack according to an embodiment of the present disclosure.
FIG. 7 is a schematic diagram of a partial structure of a battery pack according to an embodiment of the present disclosure.
FIG. 8 is a schematic diagram of a partial structure of a battery pack according to an embodiment of the present disclosure.
FIG. 9 is a schematic diagram of a partial structure of a battery pack according to an embodiment of the present disclosure, showing a portion of the structure in an XZ plane in FIG. 8.
FIG. 10 is a schematic diagram of a partial structure of a battery pack according to an embodiment of the present disclosure, showing a portion of the structure in the XZ plane in FIG. 8.
FIG. 11 is a schematic diagram of a partial structure of a battery pack according to an embodiment of the present disclosure, showing a portion of the structure in the XZ plane in FIG. 8.
FIG. 12 is a schematic diagram of a partial structure of a battery pack according to an embodiment of the present disclosure, showing a portion of the structure in the XZ plane in FIG. 8.
FIG. 13 is a schematic diagram of a partial structure of a plate of a battery pack according to an embodiment of the present disclosure, showing a portion of the structure in the XZ plane in FIG. 1.
FIG. 14 is a schematic diagram of a partial structure of a battery pack according to an embodiment of the present disclosure, showing a portion of the structure in the XY plane in FIG. 1.
FIG. 15 is a schematic diagram of a partial structure of a battery pack according to an embodiment of the present disclosure.
FIG. 16 is a schematic diagram of a partial structure of a battery pack according to an embodiment of the present disclosure, which is another example of a portion of the structure in an XZ plane in FIG. 15.

### [Modes of the Invention]

Hereinafter, specific descriptions in accordance with the present disclosure are provided with reference to the accompanying drawings. It is noted, however, that the descriptions are merely illustrative and the present disclosure is not limited to specific embodiments described in this specification.

Among the physical properties referred to in the present disclosure, if the measurement temperature affects the property, the property is measured at room temperature and atmospheric pressure unless otherwise specified.

As used herein, the term room temperature may mean a temperature which is a natural, unheated or uncooled temperature, for example, any temperature within the range of 10 °C to 30 °C, such as a temperature of about 15 °C or more, about 18 °C or more, about 20 °C or more, about 23 °C or more, about 27 °C or less, or 25 °C. Unless otherwise specified in this disclosure, the unit of temperature is degrees Celsius (°C).

Among the physical properties referred to in the present disclosure, if the measurement pressure affects the property, the property is measured at atmospheric pressure unless otherwise specified.

As used in this disclosure, the term atmospheric pressure refers to a pressure which is natural, is not pressurized, nor depressurized, typically in the range of about 700 mmHg to 800 mmHg.

As used in this disclosure, the terms a and b include a and b and mean within the range between a and b. For example, including a and b by weight is equivalent to including within the range of a and b by weight.

As used in this disclosure, the terms thickness (or height), length, and width refer to average values unless otherwise noted, and measurements may be made in any manner known in the art using any instrument capable of measuring each of thickness (or height), length, and width.

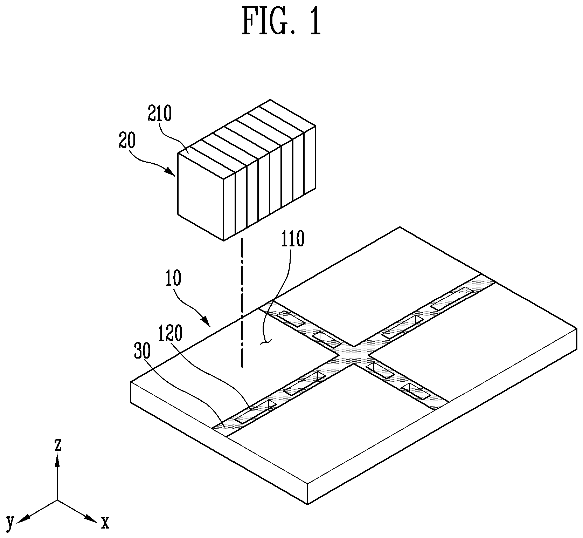

The present disclosure may provide a battery pack 1 which may effectively prevent a thermal propagation phenomenon (see FIG. 1). Further, the present disclosure may provide the battery pack 1 which may effectively dissipate heat generated in a battery cell 210. Furthermore, the present disclosure may provide the battery pack 1 which is lightweight and has the excellent durability. Furthermore, the present disclosure may provide the battery pack 1 having improved airtightness.

FIG. 1 is a schematic diagram of a partial structure of the battery pack 1 according to an embodiment of the present disclosure.

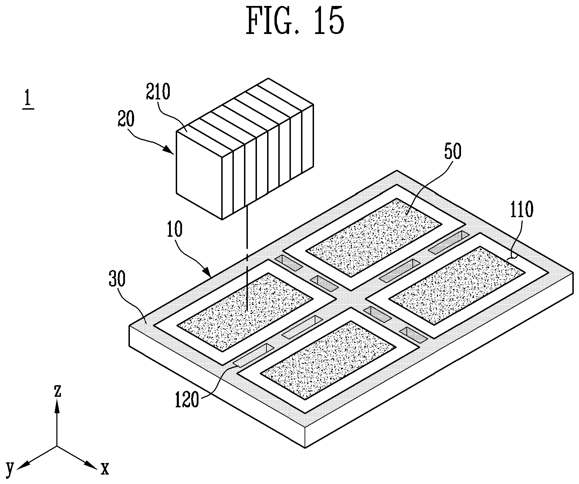

The battery pack 1 according to an embodiment of the present disclosure may include a power storage device 20 including a battery cell 210. In the present disclosure, the power storage device 20 may be the battery cell 210 itself. Alternatively, the power storage device 20 may be a stack of the battery cell 210 having a plurality of battery cells 210 stacked and electrically connected to each other. Alternatively, the power storage device 20 may be a battery module including one or more of the battery cells 210 and including a cover to house the battery cells 210 and protect the battery cells 210 from an external impact. However, in another embodiment, even when the power storage device 20 is housed in the cover, the cover on the contact surface might not be provided so that one surface of the battery cell 210 may directly contact a plate 10 or a thermally conductive layer 50 to be described below (see FIGS. 1 and 15).

As used herein, being electrically connected to each other may mean that the objects being connected form an electrical circuit when connected by the connecting means so that a current may flow through each of the objects being connected. The connecting means may be a direct contact between the objects being connected, or a wire through which a current may flow, or the like, provided that an electrical connection is possible, although this is not particularly limited. In the power storage device 20, when the power storage 20 has the plurality of battery cells 210 which are electrically connected to each other, the battery cells 210 may be electrically connected to each other in series, parallel, or any combination thereof.

In the battery pack 1 according to an embodiment of the present disclosure, a structure of the battery cell 210 may be known in the art. The battery cell 210 may have a structure which includes an electrode assembly housed within an exterior casing and filled with an electrolyte solution. In another example, the battery cell 210 may include electrodes and a solid electrolyte layer, and the solid electrolyte layer may have a separator function. The battery cell 210 including the solid electrolyte layer may be referred to as an all-solid battery.

In the battery pack 1 according to an embodiment of the present disclosure, the electrode assembly may include electrodes. The electrodes may be an umbrella term for a cathode and an anode. The electrode assembly may include a separator. The separator may be interposed between the cathode and the anode.

The cathode may mean a reduction electrode which receives electrons from an electron transfer material when the battery cell 210 is discharged. The anode may mean an oxidation electrode which transfers electrons to the electron transfer material when the battery cell 210 is discharged. Further, the separator refers to a membrane through which the electron transfer material passes while preventing an electrical short circuit between the cathode and the anode.

Further, the battery cell 210 may have a structure in which the electrode assembly is housed into a space sealed by the exterior casing and filled with the electrolyte solution. As used in the present disclosure, the term sealed space may refer to a space which is closed to the extent that liquid substances cannot escape to the outside when such substances are present in the space.

The electrolyte solution refers to a medium which causes the electron transfer material to move to facilitates the electrochemical reaction between the cathode and the anode. The electrolyte solution typically includes an organic solvent and a lithium salt, and the organic solvent and lithium salt may include those known in the art.

Depending on the type of electron transfer material, the above-mentioned batteries are categorized in various ways. For example, when the electron transfer material in a battery includes lithium (Li, including ions), the battery is called a lithium-ion battery.

Furthermore, the exterior casing may protect the electrode assembly from the external impact as described above and prevent the electrolyte solution from leaking out (i.e., the electrode assembly may be sealed). Depending on the shape of the exterior casing, the battery cell 210 may be classified as a prismatic, cylindrical, or pouch-type.

The battery pack 1 according to an embodiment of the present disclosure may include the plate 10 having a seating portion 110 in which the power storage device 20 is seated. Referring to FIG. 1, the battery pack 1 may include the plate 10 having the seating portion 110 in which the power storage device 20 is seated. The shape of the plate 10 may be determined by considering the shape of the power storage device 20. While not limited to a particular shape, for example, the overall shape of the plate 10 may be rectangular, when a surface where the plate 10 contacts the power storage device 20 is rectangular.

In the battery pack 1 according to an embodiment of the present disclosure, the plate 10 may have a through-hole 120 in at least a partial region. The plate 10 may have one through-hole 120 or a plurality of through-holes 120. Further, the through-hole 120 is a hole through the plate 10, the shape of which is not particularly limited. When the plate 10 has the through-hole 120, the heat transfer through the plate 10 may be partially suppressed, thereby effectively preventing the thermal propagation phenomenon. The heat transfer through the plate 10 may refer to conduction. Referring to FIG. 1, in the battery pack 1, the plate 10 may have the through-hole 120 in at least a partial region.

In the battery pack 1 according to an embodiment of the present disclosure, at least a part of the through-hole 120 in the plate 10 may be covered with a sealing material 130. That is, the battery pack 1 may include the sealing material 130, and the sealing material 130 may cover at least a part of the through-hole 120. Further, the sealing material 130 may cover at least one or more of the plurality of through-holes 120, and may cover at least a part of each through-hole 120. In the context of the present disclosure, covering the through-hole 120 may mean covering the through-hole 120 such that the penetrated area of the through-hole 120 is reduced.

In the battery pack 1 according to an embodiment of the present disclosure, the through-hole 120 in the plate 10 may be entirely covered with the sealing material 130. That is, the battery pack 1 may include the sealing material 130, and the sealing material 130 may entirely cover the through-hole 120. In the above-mentioned description, entirely covering the through-hole 120 may mean covering the entire penetrated area of the through-hole 120.

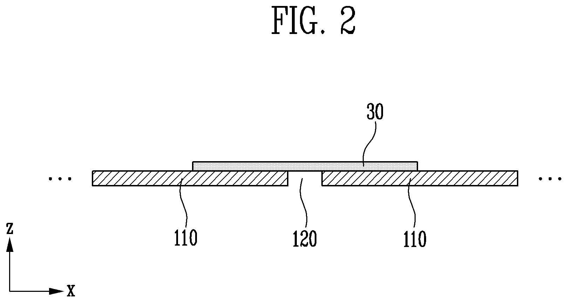

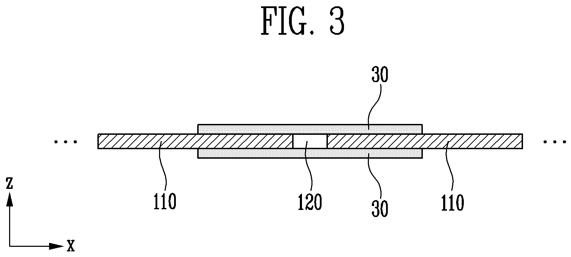

FIG. 2 is a schematic diagram of a partial structure of the battery pack 1 according to an embodiment of the present disclosure, showing a portion of the structure in an XZ plane in FIG. 1. FIG. 3 is a schematic diagram of a partial structure of the battery pack 1 according to an embodiment of the present disclosure, which is another example of FIG. 2.

Referring to FIG. 2, in the battery pack 1 according to an embodiment of the present disclosure, at least a part of the through-hole 120 in the plate 10 may be covered with the sealing material 130 at least one side. Specifically, referring to FIG. 2, in the battery pack 1 according to an embodiment of the present disclosure, the through-hole 120 in the plate 10 may be entirely covered with the sealing material 130 at least one side.

Referring to FIG. 3, in the battery pack 1 according to an embodiment of the present disclosure, at least a part of the through-hole 120 in the plate 10 may be covered with the sealing material 130 at opposite sides. Specifically, referring to FIG. 3, in the battery pack 1 according to an embodiment of the present disclosure, the through-hole 120 in the plate 10 may be entirely covered with the sealing material 130 at opposite sides.

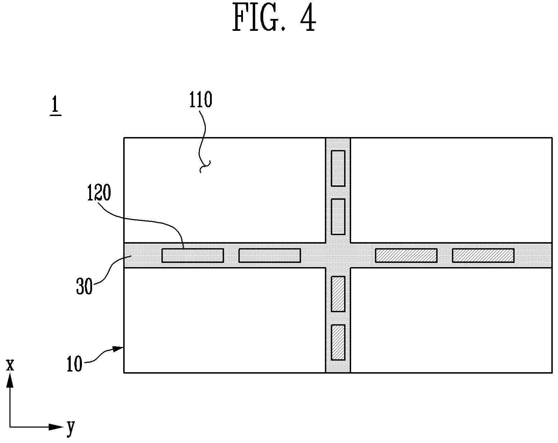

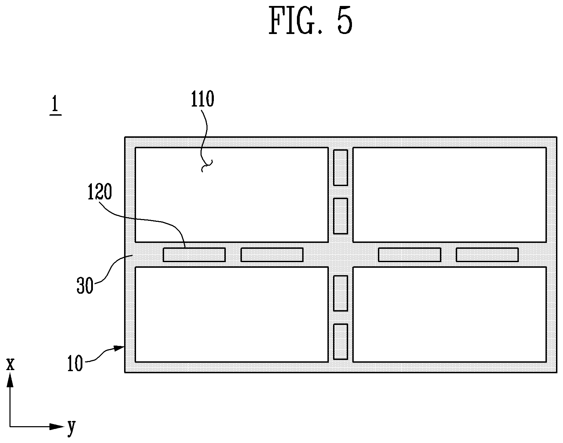

FIG. 4 is diagram of a partial structure of the battery pack 1 according to an embodiment of the present disclosure, showing a portion of the structure in an XY plane in FIG. 1. FIG. 5 is a schematic diagram of a partial structure of the battery pack 1 according to an embodiment of the present disclosure, which is another example of FIG. 4.

Referring to FIG. 4, in the battery pack 1 according to an embodiment of the present disclosure, at least a part of the through-hole 120 in the plate 10 may be covered with the sealing material 130. Furthermore, the sealing material 130 may not only cover the through-hole 120, but may further cover the periphery of the through-hole 120. Furthermore, for process convenience, the sealing material 130 may be provided continuously without breaks, as shown in FIG. 4, to cover at least a part of the through-hole 120.

Referring to FIG. 5, in the battery pack 1 according to an embodiment of the present disclosure, the sealing material 130 may cover the through-hole 120 as well as a part of the plate 10 other than the region in which the through-hole 120 is formed. Specifically, the sealing material 130 may cover at least one surface of the part of the plate 10 other than the region in which the through-hole 120 is formed. Furthermore, the sealing material 130 may further cover an outer edge of the plate 10. Referring to FIG. 5, the sealing material 130 may further cover the through-hole 120 as well as the outer edge of the plate 10. As described above, when the sealing material 130 covers not only the through-hole 120 but also the part of the plate 10 other than the region in which the through-hole 120 is formed, the excellent durability may be secured while reducing weight.

In the battery pack 1 according to an embodiment of the present disclosure, the through-hole 120 may be provided in a region which does not overlap with the seating portion 110. Referring to FIG. 1, the through-hole 120 may be provided in a region which does not overlap with the seating portion 110, i.e., the power storage device 20 which is seated in the seating portion 110 might not be seated in the through-hole 120.

In the battery pack 1 according to an embodiment of the present disclosure, the sealing material 130 may be provided in a region which does not overlap with the seating portion 110. Referring to FIG. 5, the sealing material 130 covers the outer edge of the plate 10, and at the same time, the sealing material 130 covers the through-hole 120. The seating portion 110 may be provided in a region which does not overlap with the sealing material 130, i.e., the power storage device 20 seated in the seating portion 110 might not be seated on the sealing material 130.

In the battery pack 1 according to an embodiment of the present disclosure, the plate 10 may include a plurality of seating portions 110, i.e., a plurality of power storage devices 20 may be seated in the plurality of seating portions 110, respectively, on the plate 10.

In the battery pack 1 according to an embodiment of the present disclosure, the through-hole 120 may be provided between the seating portions 110 which are adjacent to each other. Referring to FIGS. 1, 4, and 5, the through-hole 120 is provided between the seating portions 110 adjacent to each other. In the battery pack 1, when the through-hole 120 is provided between the seating portions 110 adjacent to each other, the thermal propagation phenomenon generated in the battery cell 210 may be effectively prevented. For example, due to thermal runaway occurring in one power storage device 20, heat may be transferred to another neighboring power storage device 20 through the plate 10, and in the heat transfer path, the through-hole 120 may act as a resistance to heat transfer, thereby effectively preventing the thermal propagation phenomenon.

In the battery pack 1 according to an embodiment of the present disclosure, the plate 10 may include the plurality of through-holes 120, and at least a part of each of the plurality of through-holes 120 may be covered with the sealing material 130. Referring to FIGS. 1, 4, and 5, the plate 10 may include the plurality of through-holes 120, and at least a part of each of the plurality of through-holes 120 may be covered with the sealing material 130. In another embodiment, the plate 10 may include the plurality of through-holes 120, and each of the plurality of through-holes 120 may be entirely covered with the sealing material 130.

In the battery pack 1 according to an embodiment of the present disclosure, the sealing material 130 may include an adhesive. The adhesive may be a resin that has adhesive properties on its own or may include a resin which exhibits adhesive properties through a curing or polymerization reaction. Further, the adhesive may be a room temperature curing type, a thermosetting type, a hot melt type, a pressure sensitive type, a dehumidifying type, a water type, or a solvent type. Furthermore, although the adhesive is not particularly limited as long as the adhesive has adhesive properties at room temperature and may be used in the art, the adhesive may include one or more selected from the group consisting of epoxy resins, acrylic resins, urethane resins, phenolic resins, vinyl-phenolic resins, epoxy-phenolic resins, polyvinyl acetate, polyester resins, glues, and starches. Furthermore, the adhesive may preferably include one or more selected from the group consisting of epoxy resins, acrylic resins, vinyl-phenolic resins, and epoxy-phenolic resins.

In the battery pack 1 according to an embodiment of the present disclosure, the sealing material 130 may have suitable viscosity at room temperature. By suitable viscosity, it may be meant viscosity such that when the sealing material 130 is positioned to cover the through-hole 120 as shown in FIG. 2, a part of the sealing material 130 does not pass through the through-hole 120 and thus does not cause the shape of the sealing material 130 to collapse.

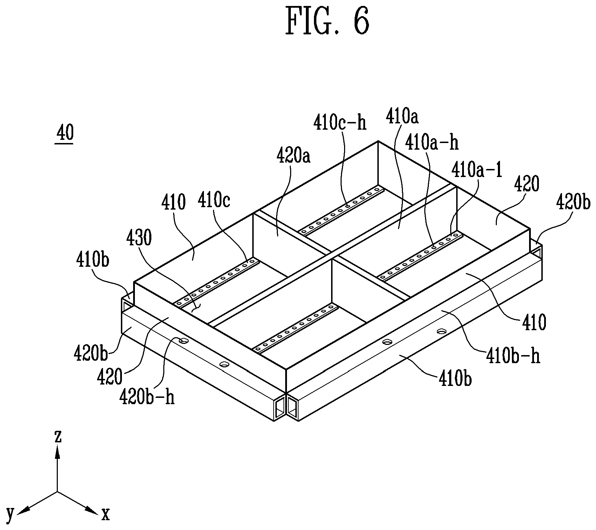

FIG. 6 is a schematic diagram of a partial structure of a pack frame 40 of the battery pack 1 according to an embodiment of the present disclosure. The battery pack 1 according to an embodiment of the present disclosure may include the pack frame 40 surrounding the power storage device 20. When the battery pack 1 includes the plurality of power storage devices 20, the pack frame 40 may surround each of the power storage devices 20. The pack frame 40 may be configured by combining and connecting multiple components in view of the descriptions to be provided below, or may be configured in a form in which multiple components are integrated through a process such as extrusion.

Referring to FIG. 6, the battery pack 1 according to an embodiment of the present disclosure may include a first frame 410 and a second frame 420. Further, the battery pack 1 may include a plurality of first frames 410 and a plurality of second frames 420. Further, in the battery pack 1, the plurality of first frames 410 may be positioned parallel to each other and the plurality of second frames 420 may be positioned parallel to each other. Further, in the battery pack 1, the first frame 410 and the second frame 420 may be connected to each other. The first frame 410 and the second frame 420 may be connected to each other by welding, joining (e.g., brazing), adhesion, or fastening means (e.g., rivets or bolts/nuts).

Further, referring to FIG. 6, in the battery pack 1 according to an embodiment of the present disclosure, the first frame 410 may be arranged to extend in a first direction and the second frame 420 may be arranged to extend in a second direction. The first direction and the second direction may be different directions, for example, referring to FIG. 6, the first direction may be a y-axis direction and the second direction may be an x-axis direction. Further, the angle which the first direction and the second direction form may be determined by the shape of the power storage device 20, for example, the first direction and the second direction may be perpendicular to each other (see FIG. 6).

Furthermore, referring to FIG. 6, in the battery pack 1 according to an embodiment of the present disclosure, the pack frame 40 may include a space 430 formed by the first frame 410 and the second frame 420. The first frame 410 and the second frame 420 may be connected to each other such that the power storage device 20 located on the plate 10 of the battery pack 1 accommodated in the formed space 430, i.e., the first frame 410 and the second frame 420 may be connected such that the power storage device 20 is enclosed by the first frame 410 and the second frame 420.

Referring to FIG. 6, in the battery pack 1 according to an embodiment of the present disclosure, the pack frame 40 may include a first partition frame 410a which delimits zones across the space 430 formed by the first frame 410 and the second frame 420. Further, the pack frame 40 may include a second partition frame 420a which delimits zones across the space 430 formed by the first frame 410 and the second frame 420. Further, the pack frame 40 may include the first partition frame 410a and the second partition frame 420a.

Further, referring to FIG. 6, in the battery pack 1 according to an embodiment of the present disclosure, the first partition frame 410a may be arranged to extend in a third direction and the second partition frame 420a may be arranged to extend in a fourth direction. The third direction and the fourth direction may be different directions, for example, referring to FIG. 6, the third direction may be the y-axis direction and the fourth direction may be the x-axis direction. Further, the angle which the third direction and the fourth direction form may be determined by the shape of the power storage device 20, for example, the third direction and the fourth direction may be perpendicular to each other (see FIG. 6).

In the battery pack 1 according to an embodiment of the present disclosure, the first partition frame 410a of the pack frame 40 may be positioned parallel to the first frame 410, i.e., the first direction and the third direction may be in the same direction as each other. Further, the second partition frame 420a of the pack frame 40 may be positioned parallel to the second frame 420, i.e., the second direction and the fourth direction may be in the same direction as each other.

Referring to FIG. 6, in the battery pack 1 according to an embodiment of the present disclosure, at least a partial region of the first frame 410 and at least a partial region of the second partition frame 420a may be connected to each other. For example, the first frame 410 and the second partition frame 420a may be connected by welding, joining (e.g., brazing), adhesion, or fastening means (e.g., rivets or bolts/nuts). Further, in the battery pack 1, at least a partial region of the second frame 420 and at least a partial region of the first partition frame 410a may be connected to each other. For example, the second frame 420 and the first partition frame 410a may be connected by welding, joining (e.g., brazing), adhesion, or fastening means (e.g., rivets or bolts/nuts).

Further, referring to FIG. 6, in the battery pack 1 according to an embodiment of the present disclosure, the pack frame 40 may include a plurality of first partition frames 410a and a plurality of second partition frames 420a. At least one or more of the first partition frames 410a may be connected to at least one or more of the second partition frames 420a, for example, may be connected to each other by welding, joining (e.g., brazing), adhesion, or fastening means (e.g., rivets or bolts/nuts). Specifically, referring to FIG. 6, in the battery pack 1, the pack frame 40 includes two first partition frames 410a and two second partition frames 420a, and each of the first partition frames 410a is connected to each of the parallel second frames 420 and is also connected to the second partition frames 420a. Furthermore, each of the second partition frames 420a is connected to each of the parallel first frames 410 and is also connected to the first partition frames 410a. The spaces 430 in which the respective power storage devices 20 can be accommodated may be formed through the positional arrangement of the first partition frames 410a and the second partition frames 420a.

Referring to FIG. 6, the pack frame 40 may form the skeleton of the battery pack 1 with the first frame 410 and the second frame 420, and may form the spaces 430 in which the respective power storage devices 20 can be accommodated with the first partition frames 410a and the second partition frames 420a. The pack frame 40 may be seated on the plate 10, the power storage device 20 seated in the seating portion of the plate 10 may pass through each space 430 of the pack frame 40, and thus the pack frame 40 may finally enclose the respective power storage devices 20.

Referring to FIG. 6, in the battery pack 1 according to an embodiment of the present disclosure, the first partition frame 410a of the pack frame 40 may include a first internal partition frame 410a-1. The first internal partition frame 410a-1 may be connected to a region of the first partition frame 410a to be seated on the plate 10. The first partition frame 410a and the first internal partition frame 410a-1 may be connected to each other, for example, by welding, joining (e.g., brazing), adhesion, or fastening means (e.g., rivets or bolts/nuts).

Further, referring to FIG. 6, in the battery pack 1 according to an embodiment of the present disclosure, the first internal partition frame 410a-1 of the pack frame 40 may be connected to the first partition frame 410a such that the first internal partition frame 410a-1 protrudes from at least one surface of the first partition frame 410a. Specifically, referring to FIG. 6, the first internal partition frame 410a-1 may be positioned to protrude in the x-axis direction from the first partition frame 410a extending in a longitudinal direction in the y-axis direction.

Further, referring to FIG. 6, the first partition frame 410a may include a plurality of first internal partition frames 410a-1. For example, referring to FIG. 6, the first partition frame 410a extending in the longitudinal direction in the y-axis direction may include the first internal partition frame 410a-1 protruding in a -x-axis direction and the first internal partition frame 410a-1 protruding in a +x-axis direction.

In the battery pack 1 according to an embodiment of the present disclosure, the excellent durability may be achieved when the first partition frame 410a of the pack frame 40 includes the first internal partition frame 410a-1.

Referring to FIG. 6, in the battery pack 1 according to an embodiment of the present disclosure, the first internal partition frame 410a-1 of the pack frame 40 may include an additional hole 410a-h. The additional hole 410a-h may include a plurality of additional holes 410a-h. Further, the additional holes 410a-h may penetrate the first internal partition frame 410a-1. When the first internal partition frame 410a-1 includes the additional holes 410a-h, when the pack frame 40 comes into contact with the sealing material 30, the sealing material 30 may be fixedly adhered to the first internal partition frame 410a-1 while filling at least a part of the additional hole 410a-h, thereby achieving better durability.

In the battery pack 1 according to an embodiment of the present disclosure, the second partition frame 420a of the pack frame 40 may also include a second internal partition frame (not shown), as may the first internal partition frame 410a-1 of the first partition frame 410a. The second internal partition frame may be connected to a region of the second partition frame 420a to be seated on the plate 10. The second partition frame 20a and the second internal partition frame may be connected to each other, for example, by welding, joining (e.g., brazing), adhesion, or fastening means (e.g., rivets or bolts/nuts).

The second internal partition frame of the pack frame 40 may be connected to the second partition frame 420a to protrude from at least one surface of the second partition frame 420a. Referring to FIG. 6, although not shown, the second internal partition frame may be positioned to protrude in the y-axis direction from the second partition frame 420a extending in a longitudinal direction in the x-axis direction.

Further, the second partition frame 420a may include a plurality of second internal partition frames. For example, referring to FIG. 6, the second partition frame 420a extending in the longitudinal direction in the x-axis direction may include the second internal partition frame protruding in a -y-axis direction and the second internal partition frame protruding in a +y-axis direction.

In the battery pack 1 according to an embodiment of the present disclosure, when the second partition frame 420a of the pack frame 40 includes the second internal partition frame, the excellent durability may be achieved.

In the battery pack 1 according to an embodiment of the present disclosure, the second internal partition frame of the pack frame 40 may include an additional hole similar to the additional hole 410a-h of the first internal partition frame 410a-1. The second internal partition frame may include a plurality of additional holes, which may penetrate the second internal partition frame. When the second internal partition frame includes the additional holes, when the pack frame 40 comes into contact with the sealing material 30, the sealing material 30 may be fixedly adhered to the second internal partition frame while filling at least a part of the additional hole, thereby achieving better durability.

Referring to FIG. 6, in the battery pack 1 according to an embodiment of the present disclosure, the first frame 410 of the pack frame 40 may include a first internal frame 410c connected to a region to be seated on the plate 10 toward each of the spaces 430 in which the power storage device 20 can be accommodated. The first frame 410 and the first internal frame 410c may be connected to each other, for example, by welding, joining (e.g., brazing), adhesion, or fastening means (e.g., rivets or bolts/nuts).

Referring to FIG. 6, in the battery pack 1, the first internal frame 410c of the pack frame 40 may be connected to the first frame 410 to protrude from a first surface of the first frame 410. Specifically, referring to FIG. 6, the first internal frame 410c may be positioned to protrude in the x-axis direction from the first frame 410 extending in the longitudinal direction in the y-axis direction.

Also, referring to FIG. 6, the first frame 410 may include a plurality of first internal frames 410c, and when there are the plurality of first frames 410, each of the first frames 410 may include one or more first internal frames 410c.

In the battery pack 1 according to an embodiment of the present disclosure, excellent durability may be achieved when the first frame 410 of the pack frame 40 includes the first internal frame 410c.

Referring to FIG. 6, in the battery pack 1 according to an embodiment of the present disclosure, the first internal frame 410c of the pack frame 40 may include an additional hole 410c-h. The additional hole 410c-h may include a plurality of additional holes 410c-h. Further, the additional holes 410c-h may penetrate the first internal frame 410c. When the first internal frame 410c includes the additional holes 410c-h, when the pack frame 40 comes into contact with the sealing material 30, the sealing material 30 may be fixedly adhered to the first internal frame 410c while filling at least a part of the additional hole 410c-h, thereby achieving better durability.

In the battery pack 1 according to an embodiment of the present disclosure, the second frame 420 of the pack frame 40 may also include a second internal frame (not shown), as may the first internal frame 410c of the first frame 410. The second internal frame of the pack frame 40 may be connected to the second frame 420 to protrude from one surface of the second frame 420. Specifically, referring to FIG. 6, the second internal frame (not shown) may be positioned to protrude in the y-axis direction from the second frame 420 extending in the longitudinal direction in the x-axis direction.

In addition, referring to FIG. 6, the second frame 420 may include a plurality of second internal frames, and when there are the plurality of second frames 420, each of the second frames 420 may include one or more second internal frames.

In the battery pack 1 according to an embodiment of the present disclosure, the excellent durability may be achieved when the second frame 420 of the pack frame 40 includes the second internal frame.

Referring to FIG. 6, in the battery pack 1 according to an embodiment of the present disclosure, the second internal frame of the pack frame 40 may include additional holes (not shown) similar to the additional holes 410c-h of the first internal frame 410c. Further, the additional holes may penetrate the second internal frame. When the second internal frame includes the additional holes, when the pack frame 40 comes into contact with the sealing material 30, the sealing material 30 may be fixedly adhered to the second internal frame while filling at least a part of the additional hole, thereby achieving better durability.

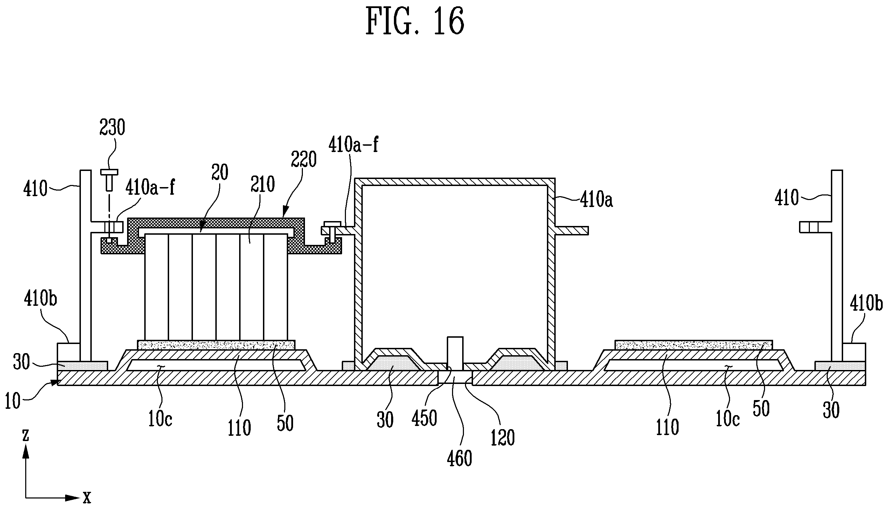

Referring to FIG. 6, in the battery pack 1 according to an embodiment of the present disclosure, the pack frame 40 may include a first auxiliary frame 410b connected to an outer surface of the first frame 410. Further, the pack frame 40 may include a second auxiliary frame 420b connected to an outer surface of the second frame 420. The first frame 410 may be connected to the first auxiliary frame 410b and the second frame 420 may be connected to the second auxiliary frame 420b. The first frame 410 and the second frame 420 may be connected to the first auxiliary frame 410b and the second auxiliary frame 420b, respectively, and independently, for example, by welding, joining (e.g., brazing), adhesion, or fastening means (e.g., rivets or bolts/nuts). For the positional relationship between the first frame 410 and the first auxiliary frame 410b, FIG. 16 may be referred to, and the positional relationship between the second frame 420 and the second auxiliary frame 420b, which will be described below, may also be sufficiently understood by those skilled in the art from FIG. 16.

Referring to FIG. 6, in the battery pack 1 according to an embodiment of the present disclosure, the first auxiliary frame 410b and the second auxiliary frame 420b may each be independently hollow for weight reduction, and may have a pipe-like shape with a cross-section, such as a triangular, rectangular, circular, or elliptical shape. Further, the first auxiliary frame 410b may be formed to extend on the outer surface of the first frame 410, and the second auxiliary frame 420b may be formed to extend on the outer surface of the second frame 420. The first auxiliary frame 410b and the second auxiliary frame 420b may be configured so as not to overlap with each other so that no structural interference occurs.

Referring to FIG. 6, in the battery pack 1 according to an embodiment of the present disclosure, the pack frame 40 may include a plurality of first auxiliary frames 410b and a plurality of second auxiliary frames 420b. Specifically, the pack frame 40 may include the plurality of first frames 410, and at least one first auxiliary frame 410b may be connected to each first frame 410. Further, at least one second auxiliary frame 420b may be connected to each second frame 420.

Referring to FIG. 6, in the battery pack 1 according to an embodiment of the present disclosure, the first frame 410 may include the first internal frame 410c, and the first auxiliary frame 410b may be connected to the first frame 410. The first internal frame 410c and the first auxiliary frame 410b may be configured not to overlap with each other. For example, the first internal frame 410c may be connected to an inner surface of the first frame 410, and the first auxiliary frame 410b may be connected to the outer surface of the first frame 410. Further, in the battery pack 1, the second frame 420 may include the second internal frame, and the second auxiliary frame 420b may be connected to the second frame 420. The second internal frame and the second auxiliary frame 420b may be configured not to overlap with each other. For example, the second internal frame may be connected to an inner surface of the second frame 420, and the second auxiliary frame 420b may be connected to the outer surface of the second frame 420.

Referring to FIG. 6, in the battery pack 1 according to an embodiment of the present disclosure, the first auxiliary frame 410b of the pack frame 40 may include one or more first frame mounting holes 410b-h. The first frame mounting holes 410b-h may penetrate the first auxiliary frame 410b. The first frame mounting holes 410b-h may be configured for the coupling with an electrical device to be described below, and the electrical device may be, for example, an automobile. For example, the automobile may include a power unit, which may include the battery pack 1 according to an embodiment of the present disclosure. In addition, the automobile may further include a power fixing unit for securing the power unit. The power fixing unit may be a part of a car body of the automobile, and by securing the power unit, the power unit might not be detached from the automobile when the automobile is being driven or even when an external impact is applied due to an accident or the like. The first frame mounting holes 410b-h may face holes formed in at least a part of the power fixing unit of the automobile, and the battery pack 1 provided in the power unit may be secured by fastening members R or the like passing through the holes. The fastening members R may be bolts or rivets, but are not particularly limited thereto.

Further, referring to FIG. 6, in the battery pack 1 according to an embodiment of the present disclosure, the second auxiliary frame 420b of the pack frame 40 may include one or more second frame mounting holes 420b-h. The second frame mounting holes 420b-h may penetrate the second auxiliary frame 420b. The second frame mounting holes 420b-h may be configured for the coupling with the electrical device to be described below, and the electrical device may be, for example, the automobile. The second frame mounting holes 420b-h may face holes formed in at least a part of the power fixing unit of the automobile, and the battery pack 1 provided in the power unit may be secured by the fastening members R or the like passing through the holes. The fastening members R may be bolts or rivets, but are not particularly limited thereto. The fastening members R may be bolts or rivets, but are not particularly limited thereto.

In other words, the automobile according to an embodiment of the present disclosure may include the power unit including the battery pack 1 and the power fixing unit for securing the power unit. Furthermore, the battery pack 1 may include the pack frame 40 including the first frame mounting holes 410b-h and the second frame mounting holes 420b-h, and one or more selected from the group consisting of the first frame mounting holes 410b-h and the second frame mounting holes 420b-h may face holes formed in at least a part of the power fixing unit. That is, one or more holes formed in at least the part of the power fixing unit may be formed in a position facing the first frame mounting holes 410b-h and/or the second frame mounting holes 420b-h. The fastening members R may pass through the one or more selected from the group consisting of the first frame mounting holes 410b-h and the second frame mounting holes 420b-h and through the holes in the power fixing unit, thereby securing the battery pack 1 to the automobile.

Further, in the battery pack 1 according to an embodiment of the present disclosure, the pack frame 40 may include steel to ensure the structural rigidity and protect the power storage device 20 from an external impact. Specifically, the components constituting the pack frame 40, such as the first frame 410 and the second frame 420, may include steel as described above.

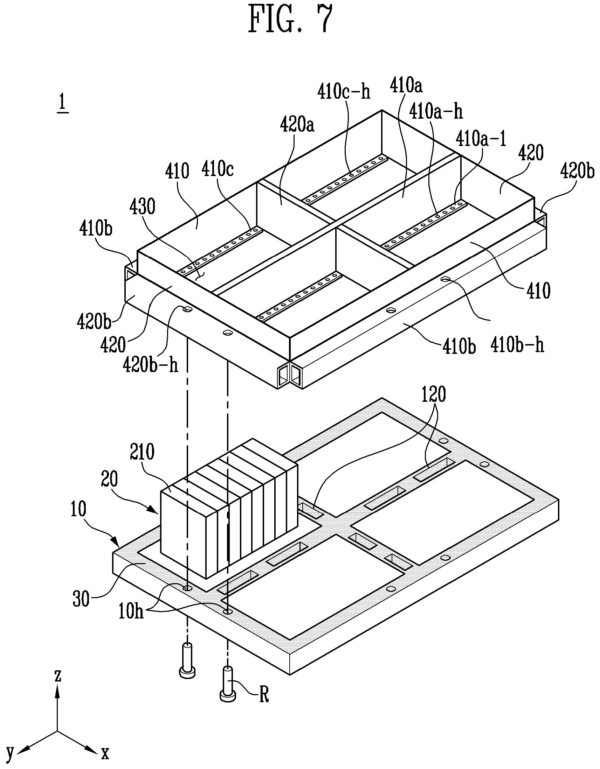

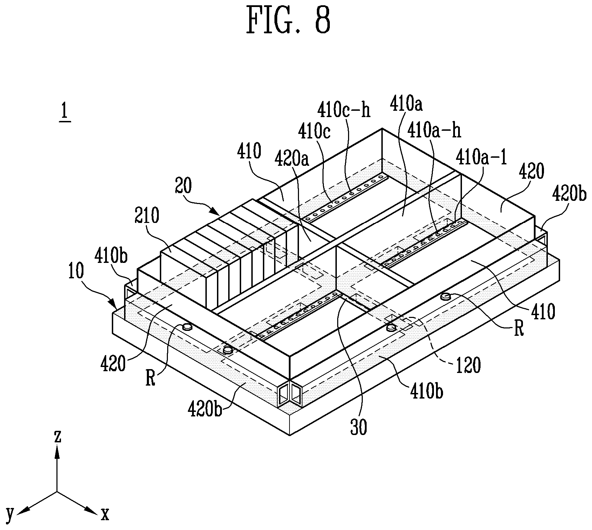

FIGS. 7 and 8 are schematic diagrams of a partial structure of the battery pack 1 according to an embodiment of the present disclosure. In the battery pack 1 according to an embodiment of the present disclosure, the pack frame 40 may be in contact with the sealing material 30 in at least a partial region.

Referring to FIG. 7, in the battery pack 1 according to an embodiment of the present disclosure, the pack frame 40 may be in contact in at least a partial region with the sealing material 30 covering at least a part of the through-hole 120 on the plate 10. Also, referring to FIG. 7, the pack frame 40 may surround each of the power storage devices 20 seated in the seating portion 110, while still being in contact with the sealing material 30 in at least the partial region.

Referring to FIG. 7, the plate 10 may include plate mounting holes 10h. The plate mounting holes 10h may penetrate the plate 10. Further, the plate 10 may have the plate mounting holes 10h in a region which does not overlap with the through-holes 120, and the plate mounting holes 10h may be provided in a position facing holes (not shown) formed in at least a part of the pack frame 40. When the pack frame 40 is seated on the plate 10, the holes formed in at least a part of the pack frame 40 may face the plate mounting holes 10h provided in the plate 10. As such, the plate mounting holes 10h may be provided in the position facing the holes formed in at least a part of the pack frame 40, so that the fastening members R may pass through the plate mounting holes 10h and further through the holes formed in at least a part of the pack frame 40. The fastening members R may be, for example, bolts or rivets, but are not particularly limited thereto. The fastening members R may provide the excellent durability.

Referring to FIG. 8, the pack frame 40 is seated on the plate 10. Specifically, the pack frame 40 is seated on the plate 10 such that at least a part of the pack frame 40 is in contact with the sealing material 130 provided on the plate 10. Further, referring to FIG. 8, the pack frame 40 may allow the power storage device 20 to be accommodated in the space 430 formed by the first frame 410, the second frame 420, the first partition frame 410a, and the second partition frame 420a. In other words, the pack frame 40 may enclose the power storage device 20. Furthermore, referring to FIG. 8, the pack frame 40 and the plate 10 may be more strongly coupled and secured by the fastening members R.

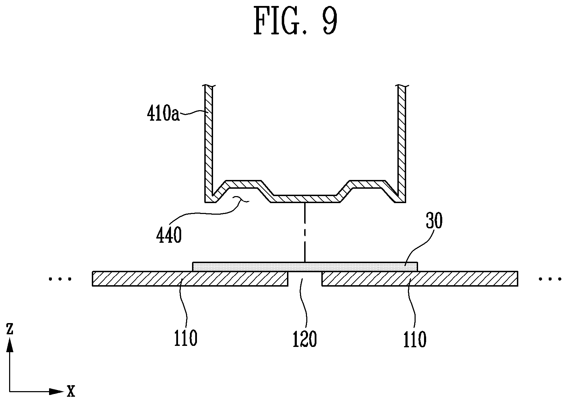

FIGS. 9 to 12 are schematic diagrams of a partial structure of the battery pack 1 according to an embodiment of the present disclosure, showing a portion of the structure in the XZ plane in FIG. 8.

FIG. 9 is a view of the pack frame 40 just before the pack frame 40 is seated on the plate 10. Specifically, FIG. 9 is a view of the first partition frame 410a of the pack frame 40 just before the first partition frame 410a is seated on the plate 10 provided with the sealing material 30 covering at least a part of the through-hole 120. While FIG. 9 illustrates only the first partition frame 410a, those skilled in the art will readily understand that the second partition frame 420a will be similar.

Referring to FIG. 9, in the battery pack 1 according to an embodiment of the present disclosure, the pack frame 40 may include groove portions 440 in at least a part of a region in contact with the sealing material 30. Specifically, referring to FIG. 9, in the battery pack 1, the first partition frame 410a of the pack frame 40 may include the groove portions 440 in at least a part of the region in contact with the sealing material 30. As described above, the second partition frame 420a of the pack frame 40 may similarly include the groove portions 440 in at least a part of the region in contact with the sealing material 30.

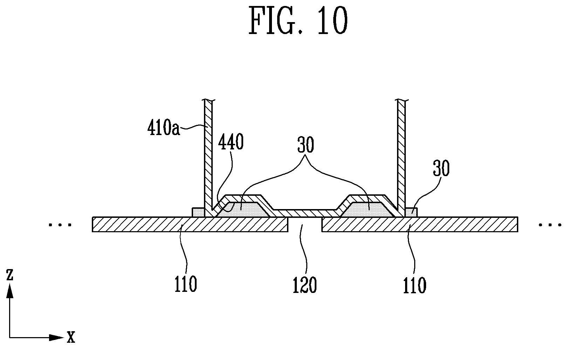

Referring to FIG. 10, in the battery pack 1 according to an embodiment of the present disclosure, the sealing material 30 may fill at least a partial region of the groove portion 440. Specifically, referring to FIG. 10, in the battery pack 1, the sealing material 30 may fill at least a partial region of the groove portion 440 of the first partition frame 410a. Further, as described above, the sealing material 30 may fill at least a partial region of the groove portion 440 of the second partition frame 420a. Also, referring to FIG. 10, the sealing material 30 may entirely fill the groove portion 440.

In the battery pack 1 according to an embodiment of the present disclosure, when the pack frame 40 includes the groove portions 440 in at least a part of the region in contact with the sealing material 30, and the sealing material 30 fills at least a partial region of the groove portion 440, the excellent airtightness and durability may be achieved.

Referring to FIGS. 9 and 10, in the battery pack 1 according to an embodiment of the present disclosure, the pack frame 40 may include the groove portions 440 which do not face the through-hole 120. That is, the groove portions 440 of the pack frame 40 may be positioned not to face at least a part of the through-hole 120. As described above, when the groove portions 440 are positioned to not face the through-hole 120, the excellent airtightness and durability may be achieved.

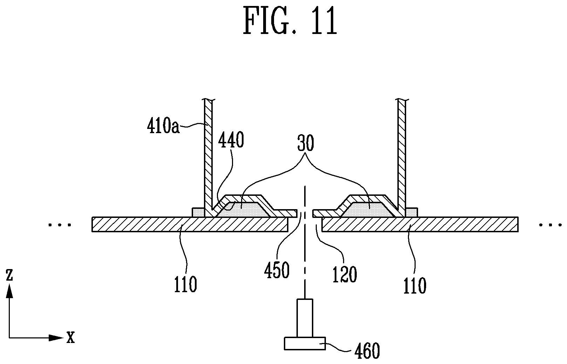

Referring to FIG. 11, the battery pack 1 according to an embodiment of the present disclosure may include a fixing member 460. Further, in the battery pack 1, the pack frame 40 may have a mounting hole 450, and the mounting hole 450 may penetrate the pack frame 40. More specifically, the first partition frame 410a of the pack frame 40 may have the mounting hole 450, and the mounting hole 450 may penetrate the first partition frame 410a. Further, as described above, the second partition frame 420a may have the mounting hole 450, and the mounting hole 450 may penetrate the second partition frame 420a.

Referring to FIG. 11, in the battery pack 1 according to an embodiment of the present disclosure, the fixing member 460 may pass through the through-hole 120 in the plate 10 and further pass through the mounting hole 450. Because the fixing member 460 is fixed after passing through the through-hole 120 and the mounting hole 450, the fixing member 460 more strongly couples and secures the plate 10 and the pack frame 40 to each other, thereby ensuring the excellent durability. That is, the fixing member 460 may couple and secure the plate 10 and the pack frame 40 to each other. The fixing member 460 may be, for example, a bolt or rivet, although not particularly limited to, as long as the fixing member 460 may pass through the through-hole 120 and the mounting hole 450 to couple and secure the plate 10 and the pack frame 40 to each other. Reference may be made to FIG. 16 for the fixing member 460.

Referring to FIG. 11, in the battery pack 1 according to an embodiment of the present disclosure, the mounting hole 450 and the through-hole 120 may face each other in at least a partial region. Specifically, in the battery pack 1, the mounting hole 450 and the through-hole 120 may face each other in at least a partial region which is sized to allow the fixing member 460 to pass through. The fixing member 460 may pass through both the through-hole 120 provided in the plate 10 and the mounting hole 450 provided in the pack frame 40 to couple and secure the plate 10 and the pack frame 40 together.

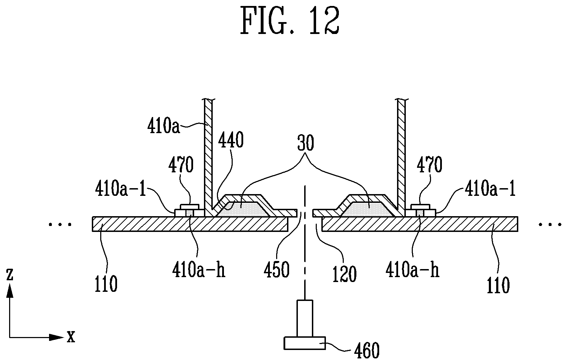

Referring to FIGS. 6 and 12, as described above, the pack frame 40 may include the additional holes. Specifically, the first internal partition frame 410a-1 of the pack frame 40 may include the additional holes 410a-h, and the second internal partition frame of the pack frame 40 may also include the additional holes.

Referring to FIG. 12, when the pack frame 40 is seated on the plate 10 with the sealing material 30 in contact with at least a partial region, at least a part of the additional hole 410a-h of the pack frame 40 may be filled with the sealing material 30. To prevent the sealing material 30 from overflowing through the additional hole 410a-h, at least a part of the additional hole 410a-h may be covered by sealing tape 470. The description of the additional hole 410a-h may also be applicable to the second internal partition frame as well as the first internal partition frame 410a-1.

Referring to FIG. 12, the pack frame 40 may have the additional holes 410a-h and the sealing tape 470, and at least a part of each of the additional holes 410a-h may be covered by the sealing tape 470. Furthermore, referring to FIG. 12, each of the additional holes 410a-h may be entirely covered by the sealing tape 470. A material of the sealing tape 470 is not particularly limited, as long as the material of the sealing tape 470 prevents the sealing material 30 from overflowing through the additional hole 410a-h.

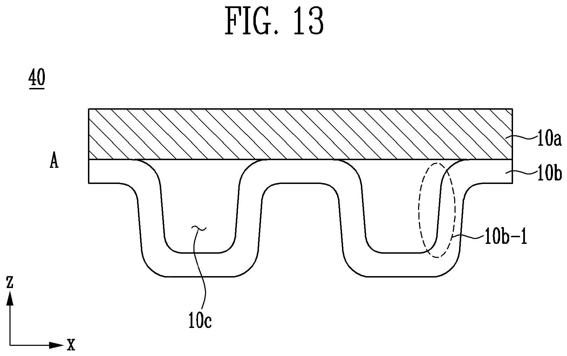

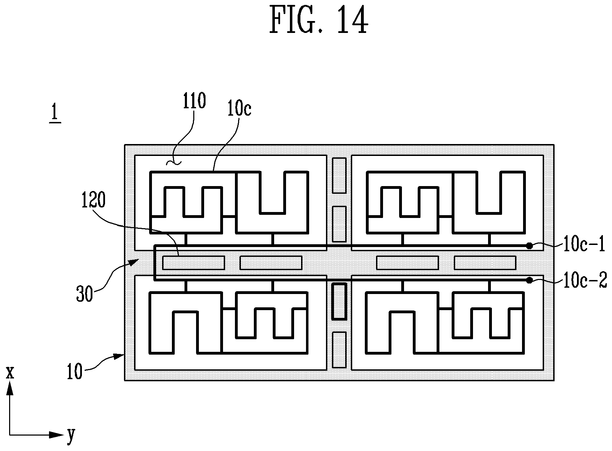

FIG. 13 is a schematic diagram of a partial structure of the plate 10 of the battery pack 1 according to an embodiment of the present disclosure, showing a portion of the structure in the XZ plane in FIG. 1. FIG. 14 is a schematic diagram of a partial structure of the battery pack according to an embodiment of the present disclosure, showing a portion of the structure in the XY plane in FIG. 1.

Referring to FIG. 13, in the battery pack 1 according to an embodiment of the present disclosure, the plate 10 may include a first plate 10a having a plate shape and a second plate 10b having a bent shape.

In the battery pack 1 according to an embodiment of the present disclosure, the first plate 10a and the second plate 10b may be joined and connected. The first plate 10a and the second plate 10b may be connected to each other by welding, joining (e.g., brazing), adhesion, or fastening means (e.g., rivets or bolts/nuts). Preferably, the first plate 10a and the second plate 10b may be connected to each other by welding or joining (e.g., brazing).

In the battery pack 1 according to an embodiment of the present disclosure, the first plate 10a may be referred to as an upper plate, and the second plate 10b may be referred to as a lower plate according to their relative positional relationship. Alternatively, in the battery pack 1, the first plate 10a may be referred to as a lower plate, and the second plate 10b may be referred to as an upper plate according to their relative positional relationship. In the battery pack 1, the seating portion 110 may be provided on the upper plate. That is, according to the positional relationship, the seating portion 110 may be provided to one surface of the first plate 10a (specifically, the surface other than a surface abutting the second plate 10b), and the power storage device 200 may be seated in the seating portion 110. Alternatively, according to the positional relationship, the seating portion 110 may be provided to one surface of the second plate 10b (specifically, the surface other than a surface abutting the first plate 10a), and the power storage device 200 may be seated in the seating portion 110.

Referring to FIGS. 13 and 14, in the battery pack 1 according to an embodiment of the present disclosure, the plate 10 may include a flow path 10c in at least a part of a space between the first plate 10a and the second plate 10b. The flow path 10c may be formed by the first plate 10a having a plate shape and the second plate 10b having a bent shape 10b-1. Further, the flow path 10c may be formed throughout the plate 10 by appropriately designing the first plate 10a and the second plate 10b. In particular, the flow path 10c may allow a heat transfer medium (not shown) capable of absorbing heat generated by the power storage device 20 seated in the seating portion 110 to pass through. Furthermore, reference may be made to FIG. 16 for the flow path 10c.

The heat transfer medium may perform the function of receiving heat generated by the power storage device 20 and absorbing and dissipating the heat. The heat transfer medium may include one or more selected from the group consisting of gaseous media such as air and liquid media such as water, but is not particularly limited as long as the heat transfer medium is a fluid capable of flowing through the flow path 10c.

Furthermore, referring to FIG. 14, in order to allow the heat transfer medium to pass through the flow path 10c, the plate 10 may include an inlet portion 10c-1 and an outlet portion 10c-2 which may connect the flow path 10c to the outside. Through the inlet portion 10c-1, the heat transfer medium to pass through the flow path 10c may be injected into the flow path 10c, and through the outlet portion 10c-2, the heat transfer medium which has received the heat may be discharged from the flow path 10c to the outside.

Furthermore, FIG. 14 is only an example of design of the flow path 10c, and a design method for the flow path 10c is not limited as long as the flow path 10c has a structure capable of effectively dissipating heat generated by the power storage device 20.

Referring to FIG. 13, in the battery pack 1 according to an embodiment of the present disclosure, the plate 10 may include the flow path 10c in a region where the through-hole 120 is not provided. By arranging the through-hole 120 of the plate 10 and the flow path 10c so as not to overlap with each other, heat generated by the power storage device 20 may be effectively dissipated.

FIG. 15 is a schematic diagram of a partial structure of the battery pack 1 according to an embodiment of the present disclosure. Referring to FIG. 15, the battery pack 1 according to an embodiment of the present disclosure may include a thermally conductive layer 50 on the seating portion 110. The thermally conductive layer 50 may be provided on at least a partial region of each of the seating portions 110. Furthermore, the power storage device 20 may be seated on the thermally conductive layer 50.

Referring to FIG. 15, the thermally conductive layer 50 may be formed in the form of a layer, and may transfer the heat generated by the power storage device 20 to the plate 10 by conduction. Furthermore, the thermally conductive layer 50 may be a heat dissipation layer, and may be used to adhere and secure the power storage device 20 to the seating portion 110 of the plate 10.

Further, the thermally conductive layer 50 may include an adhesive component. The adhesive component may include one or more selected from the group consisting of silicone resins, acrylic resins, urethane resins, and epoxy resins. Further, the adhesive component may have adhesive properties on its own, or might not have adhesive properties on its own but may be made to ensure adhesive properties through a curing or polymerization reaction.

Further, the thermally conductive layer 50 may have the thermal conductivity of 0.1 W/m·K or more, 0.2 W/m·K or more, 0.3 W/m·K or more, 0.4 W/m·K or more, 0.5 W/m·K or more, 0.6 W/m·K or more, 0.7 W/m·K or more, 0.8 W/m·K or more, 0.9 W/m·K or more, or 1 W/m·K or more, or 10 W/m·K or less, 9.5 W/m·K or less, 9 W/m·K or less, 8.5 W/m·K or less, 8 W/m·K or less, 7.5 W/m·K or less, or 7 W/m·K or less. The thermal conductivity of the thermally conductive layer 50 may be within a range obtained when the upper and lower limits described above are appropriately selected. When the thermally conductive layer 50 has the aforementioned thermal conductivity, an excellent heat dissipation effect may be ensured. The thermal conductivity of the thermally conductive layer 50 may refer to a value measured in the thickness direction of a sample (cured material) having a thickness of 20 mm, in accordance with ASTM D5470 or ISO 22007-2 standards.

Further, the thermally conductive layer 50 may include a heat-dissipating component. The heat-dissipating material may impart heat dissipation properties to the thermally conductive layer 50. Various heat-dissipating materials known in the art may be used as the heat-dissipating material, without particular limitation. The heat-dissipating material may include ceramic fillers such as an aluminum oxide, an aluminum hydroxide, a magnesium oxide, a magnesium hydroxide, and a boron nitride.

In addition, the thermally conductive layer 50 may further include a flame retardant material as needed. The flame retardant material may impart flame retardant properties to the thermally conductive layer 50. Various flame retardants known in the art may be used as the flame retardant material, without particular limitation. The flame retardant may be a halogen-based flame retardant containing a halogen element (a term encompassing F, Cl, Br, and I) or a non-halogen flame retardant not containing a halogen element. Alternatively, a phosphorus-based flame retardant containing phosphorus (P) or an inorganic flame retardant such as a metal oxide (e.g., aluminum hydroxide) may be used.

FIG. 16 is a schematic diagram of a partial structure of the battery pack 1 according to an embodiment of the present disclosure, which is another example of a portion of the structure in an XZ plane in FIG. 15.

In the battery pack 1 according to an embodiment of the present disclosure, the battery cells 210 included in the power storage device 20 may be in direct contact with the thermally conductive layer 50. In another embodiment, in the battery pack 1, the battery cells 210 included in the power storage device 20 may be in direct contact with the seating portion 110 of the plate 10.

Referring to FIG. 16, the power storage device 20 may include one or more battery cells 210, the battery cells 210 may be electrically connected to each other, and the battery cells 210 may be protected from an external impact by a battery cover 220. At the same time, in the power storage device 20, the battery cells 210 may be in direct contact with the thermally conductive layer 50 as described above, or in another embodiment, the battery cells 210 may be in direct contact with the seating portion 110 of the plate 10. When the power storage device 20 has the above-described structure, the heat generated by the battery cells 210 may be effectively dissipated.

Referring to FIG. 16, the pack frame 40 may include a coupling frame and a coupling partition frame for securing the power storage device 20 seated in the seating portion 110 to the pack frame 40. While FIG. 16 illustrates the first frame 410 and the first partition frame 410a, it will be obvious to those skilled in the art that the same may applies to the second frame 420 and a second partition frame 420a.

Referring to FIG. 16, the pack frame 40 may include coupling frames 410-f and coupling partition frames 410a-f. Specifically, the first frame 410 of the pack frame 40 may include the coupling frames 410-f, and the first partition frame 410a of the pack frame 40 may include the coupling partition frames 410a-f. The coupling frame 410-f and the coupling partition frame 410a-f may each be provided to protrude inwardly, toward a side where the seating portion 110 is located, so as to be coupled to the battery cover 220 of the power storage device 20. Specifically, referring to FIG. 16, the coupling frame 410-f may protrude from the first frame 410 in the +x direction, which is an inner side where the seating portion 110 is located, and the coupling partition frame 410a-f may protrude from the first partition frame 410a in the -x direction, which is an inner side where the seating portion 110 is located.

As described above, the pack frame 40 may be similarly configured with respect to the second frame 420 and the second partition frame 420a, and the second frame 420 may include coupling frames, and the second partition frame 420a may include coupling partition frames. The coupling frame and the coupling partition frame may each be provided to protrude inwardly, toward the side where the seating portion 110 is located, so as to be coupled to the battery cover 220 of the power storage device 20.

Referring to FIG. 16, the battery pack 1 according to an embodiment of the present disclosure may include cover fixing members 230 for coupling and securing the battery cover 220 and the pack frame 40. In the battery pack 1, the coupling frame 410-f and the coupling partition frame 410a-f may have through-holes for the cover fixing members 230 to pass through. The battery cover 220 may have threads or through-holes in positions corresponding to the through-holes provided in the coupling frame 410-f and the coupling partition frame 410a-f, and when the cover fixing members 230 are engaged therebetween, the battery cover 220 and the pack frame 40 may be coupled and secured. The cover fixing members 230 may be, for example, bolts or rivets, although the cover fixing members 230 are not particularly limited as long as the cover fixing members 230 are capable of coupling and securing the battery cover 220 and the pack frame 40.

An electrical device according to an embodiment of the present disclosure may include one or more battery packs 1 according to an embodiment of the present disclosure. The electrical device refers to a device which operates via power generated by the battery cells 210 or the like. The electrical device may be, for example, a cell phone, an appliance, an automobile (an electric vehicle or hybrid vehicle), or an energy storage system (ESS).

The descriptions as set forth above are merely examples of applying the principles of the disclosure, and other configurations may be further included without departing from the scope of the disclosure.

## Claims

1. A battery pack, comprising:
a power storage device including one or more battery cells; and
a plate having a seating portion in which the power storage device is seated,
wherein the plate has a through-hole in at least a partial region thereof, and
wherein at least a part of the through-hole is covered with a sealing material.

2. The battery pack of claim 1, wherein the through-hole is provided in a region which does not overlap with the seating portion.

3. The battery pack of claim 1, wherein the plate includes a plurality of seating portions, and
wherein the through-hole is provided between the seating portions which are adjacent to each other.

4. The battery pack of claim 1, wherein the plate includes a plurality of through-holes, and
wherein at least a part of each of the through-holes is covered with the sealing material.

5. The battery pack of claim 1, wherein the sealing material includes an adhesive.

6. The battery pack of claim 1, wherein the through-hole is entirely covered with the sealing material.

7. The battery pack of claim 1, further comprising a pack frame surrounding the power storage device,
wherein the pack frame is in contact with the sealing material in at least a partial region.

8. The battery pack of claim 7, wherein the pack frame further includes a groove portion in at least a part of the region in contact with the sealing material.

9. The battery pack of claim 8, wherein the sealing material fills at least a partial region of the groove portion.

10. The battery pack of claim 8, wherein the pack frame includes the groove portion which does not face the through-hole.

11. The battery pack of claim 7, further comprising the fixing member,
wherein the fixing member couples and secures the plate and the pack frame to each other.

12. The battery pack of claim 11, wherein the pack frame has a mounting hole,
wherein the mounting hole and the through-hole face each other in at least a partial region, and
wherein the fixing member passes through both the through-hole provided in the plate and the mounting hole provided in the pack frame to couple and secure the plate and the pack frame together.

13. The battery pack of claim 12, wherein the pack frame further has an additional hole and sealing tape, and
wherein at least a part of the additional hole is covered by the sealing tape.

14. The battery pack of claim 1, wherein the plate includes a first plate having a plate shape and a second plate having a bent shape, and
wherein the first plate and the second plate are joined and connected.

15. The battery pack of claim 14, wherein the plate further includes a flow path in at least a part of a space between the first plate and the second plate.

16. The battery pack of claim 15, wherein the plate includes the flow path in a region where the through-hole is not provided.

17. The battery pack of claim 1, comprising a thermally conductive layer on the seating portion,
wherein the power storage device is seated on the thermally conductive layer.

18. The battery pack of claim 17, wherein the thermally conductive layer has thermal conductivity of 0.1 W/m·K or more.

19. The battery pack of claim 17, wherein the battery cells included in the power storage device are in direct contact with the thermally conductive layer.

20. An automobile comprising:
a power unit including the battery pack of claim 1; and
a power fixing unit for securing the power unit,
wherein the battery pack includes a pack frame including a first frame mounting hole and a second frame mounting hole,
wherein one or more selected from a group consisting of the first frame mounting hole and the second frame mounting hole face a hole formed in at least a part of the power fixing unit, and
wherein a fastening member passes through the one or more selected from the group consisting of the first frame mounting hole and the second frame mounting hole and through a hole in the power fixing unit, and secures the battery pack.
